# EUROPEAN PATENT SPECIFICATION

(11) **EP 0 815 000 B1**
(45) Date of publication and mention of the grant of the patent: **19.01.2000**
(21) Application number: 96907552.2
(22) Date of filing: 15.03.1996
(51) Int. Cl.: B62D 55/275

(54) **ROAD PADS FOR TRACKED VEHICLES**
GLEISKETTENPOLSTER FÜR KETTENFAHRZEUGE
AMORTISSEUR POUR CHENILLES DE VEHICULES

(30) Priority: 18.03.1995 GB 9505515
(43) Date of publication of application: 07.01.1998
(73) Proprietor: William Cook Cast Products Limited, Sheffield, South Yorkshire S9 4UL (GB)
(72) Inventor: BAKER, Peter, Edward, Gainford, County Durham D12 3EJ (GB)
(74) Representative: Tunstall, Christopher Stephen
(86) International application number: GB9600625
(87) International publication number: WO9629234

(56) References cited:
- DE-A- 3 909 043
- US-A- 3 973 807

## Description

This invention relates to road pads for tracked vehicles such as tanks. Road pads are incorporated into the tracks to cushion the impact between the tracks and the surface upon which the vehicle is driven. Between adjacent plates of the track, track links are located, coupled to the plates via bushes, to allow articulation of the track. The road pads are usually fixed to the track links.

An example of an arrangement as described above can be found in UK patents nos. 1077444 and 1405742. In each case, the pad consists of a metallic backing plate and a rubber cushion bonded to one side of the backing plate. The edges of the backing plate project beyond the cushion and acts as guides which enable the pad to be slid into cooperating grooves in the track link. Part of the backing plate is cut out and raised to form a latching protection which cooperates with a latch on the track link to retain the pad in place. US 3973807 discloses a wire cable chain with chain links equipped with cushions. The cushions are provided with guides which slide into a corresponding recess of a chain link plate. The cushion has a sheet metal projection which engages an abutment of the chain link plate to retain the cushion in place.

These road pads have been found to suffer from a number of disadvantages. Firstly, the size of the backing plate and the cost of the material from which it is made contribute significantly to the cost of producing the pad. Many pads are used on each vehicle and the cost of kitting out the vehicle is increased accordingly. Secondly, the backing plate is prone to corrosion. Although the life of the backing plate exceeds that of the rubber cushion, the pad can be reconditioned by vulcanising a replacement cushion to the plate. Corrosion of the plate can reduce considerably the number of times the pad can be reconditioned.

It has recently been proposed to manufacture road pads almost entirely from polymeric material. The backing plates are formed from hard plastics material, either plain or fibre reinforced, to which the rubber cushion is bonded. The strength of the backing plate is sufficient to form the guide protections on either side of the pad to enable it to slide in and out of the track link. However, to date, no plastics backing plate material has been able to deal with the stresses which must be withstood by the latching projection. Such plastics-backed pads are therefore provided with metallic reinforcements moulded into the backing plate and projecting from it to form the latching projection. Such reinforcements are machined and are therefore expensive to manufacture. They are also subject to corrosion.

It is an object of the present invention to address these problems. Accordingly, the present invention provides a road pad adapted for sliding engagement within a track link, the pad comprising a body of polymeric material having a latching projection adapted to cooperate with an abutment of the link to prevent withdrawal of the pad characterised in that the latching projection includes a reinforcing element encapsulated within the polymeric material. Because the reinforcing element is encapsulated within the polymeric material, it is not exposed to corrosive elements. As will be explained, the bulk of the latching projection can be formed from the polymeric material, enabling the reinforcing element to be manufactured inexpensively and using cost-effective manufacturing processes.

To give the pad structural rigidity, the body preferably comprises a backing plate and a cushion, the reinforcing element being encapsulated within the backing plate or between the backing plate and the cushion. The backing plate is preferably formed from plastics material and the cushion from a rubber material.

To impart a degree of flexibility to the latching projection, the reinforcing element may be resilient. For example, it may be formed from steel plate.

Preferably, the reinforcing element comprises a flat and a resilient tongue projecting from it into the latching projection. The flat serves to anchor the reinforcing element in the body or backing plate and the tongue reinforces the latching projection. The tongue need only extend into that part of the latching projection which acts as the abutment surface to retain the pad in place in the track link.

The tongue may be an angled cut-out from the flat or it may be an angled extension of the flat.

For increased security, the body may have two latching projections. Each latching projection may be reinforced by a reinforcing element or alternatively the latching projections may be reinforced by a common reinforcing element. Such a common reinforcing element may comprise a flat and two tongues projecting from it into the latching projections. The reinforcing element may form a channel section with the tongues as the uprights of the channel.

The present invention will now be described with reference to the accompanying drawings in which:
figs. 1A and 1B illustrate a road pad made from a plastics backing plate and a rubber cushion;
fig. 2A is a lateral section through a track link for use with such a plastics-backed plate;
fig. 2B shows in longitudinal section a pad installed in the link of fig. 2A; and
figs. 3A, 3B to 16A, 16B show in plan and in section a variety of reinforced plastics backing plates for use in a pad according to the present invention.

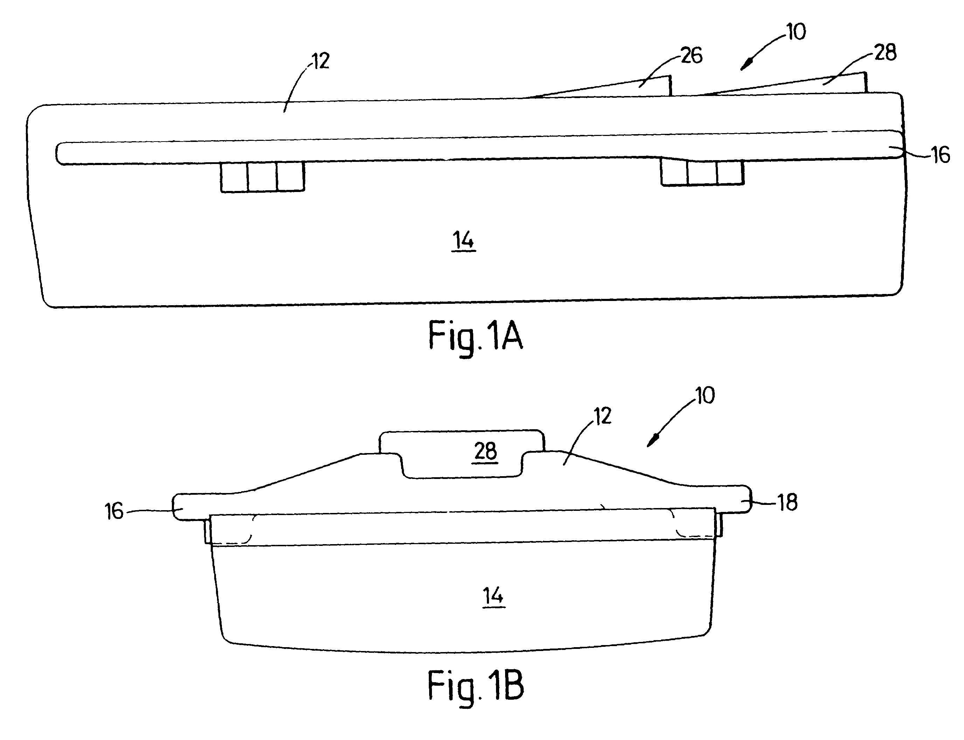

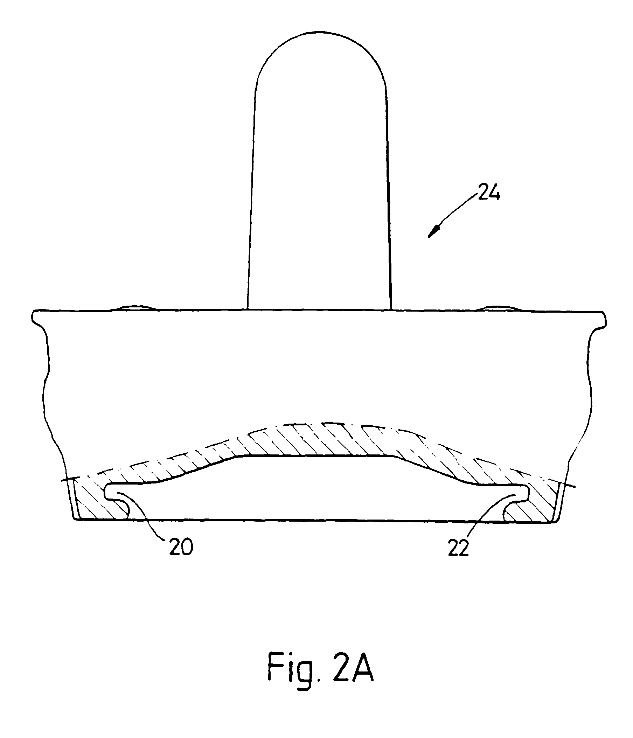

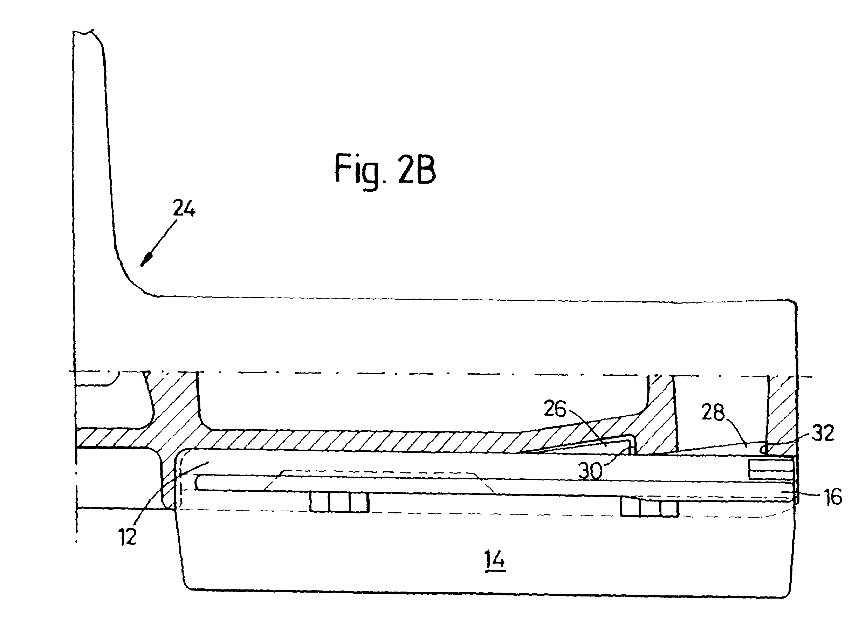

As can be seen from figs. 1A and 1B, a typical plastics-backed pad 10 consists of a rubber cushion 14 vulcanised onto a plastics backing plate 12. At either side of the pad, the edges of the backing plate 12 extend beyond those of the cushion 14 to form guides 16, 18. These guides are tapered at their leading edges and cooperate with grooves 20, 22 in the track link 24 illustrated in fig. 2. The pad 10 is located in the link 24 and pushed into place such that the guides 16, 18 slide within the grooves 20, 22. When the pad is pushed fully home, latching projections 26, 28 cooperate latching surfaces 30, 32 in the track link to retain the pad in place. The pad can be removed by releasing the latching projections 26, 28 from the latching surfaces 30, 32 using a specially-designed tool.

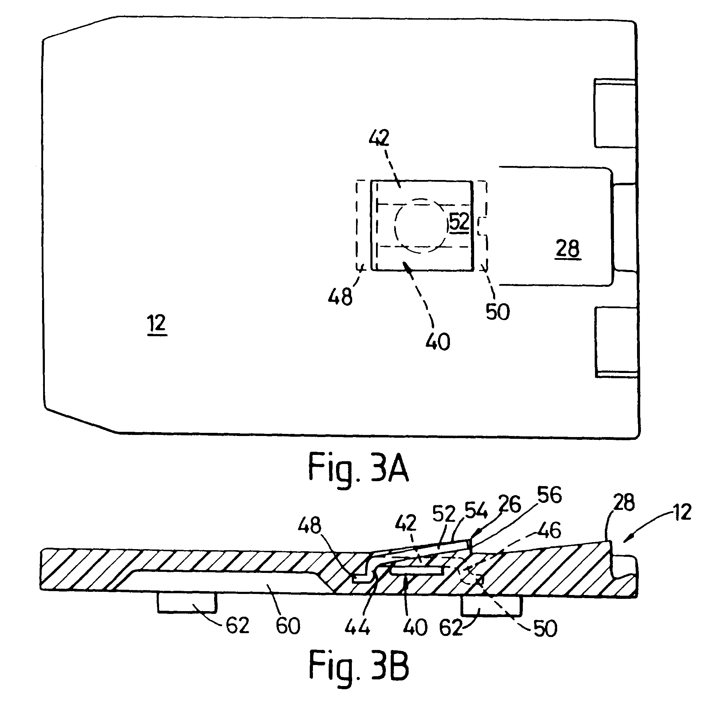

Fig. 3A shows in plan and fig. 3B in section a reinforced, moulded plastics backing plate 12 for use in a pad according to the present invention. The plate 12 is similar to the plate 12 illustrated in figs. 1A and 1B, but one of the latching projections 26 is strengthened by a reinforcing element 40. The reinforcing element 40 is formed from pressed steel plate and consists of a flat 42, both ends of which are turned down to form legs 44, 46 and include a return bend which forms feet 48, 50.

A substantially rectangular section is stamped out of the steel sheet on three sides to form a cut-out tongue 52 which is bent out of the plane of the flat 42 along its fourth side and projects into the latching projection 26. The tongue 52 lies close to the inclined outer surface 54 of the latching projection 26 and extends almost as far as its abutment surface 56, i.e. the surface which engages a latching surface 30 of the track link 24. The pad includes a second latching projection 28 which is not reinforced.

The surface of the backing plate 12 opposite the latching projections includes a depression 60 and keys 62 which help the vulcanised rubber cushion to bond to it.

The backing plate 12 is injection moulded with the reinforcing element 40 in situ. The correct positioning of the insert 40 to ensure in this case that it does not contact the surfaces of the mould is important. The insert 40 is positioned in the mould by means of stepped retaining pins together with magnets which ensure that the insert 40 is not dislodged from the pins during the injection moulding process. Subsequently a rubber cushion 14 (not shown) is vulcanised to the recessed and keyed surface of the backing plate 12.

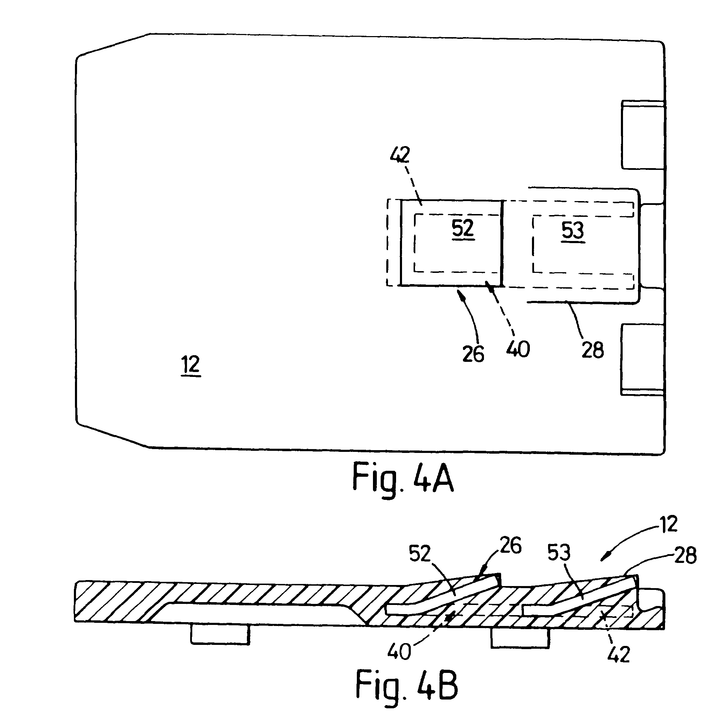

Fig. 4A shows in plan and fig. 4B in section a reinforced, moulded plastics backing plate 12 in which both latching projections 26, 28 are reinforced by a common reinforcing element 40. The reinforcing element is again formed from pressed steel and is similar to the reinforcing element 40 of figs. 3A and 3B, but includes two substantially rectangular cut-out tongues 52, 53, each of which reinforces a respective latching projection 26, 28.

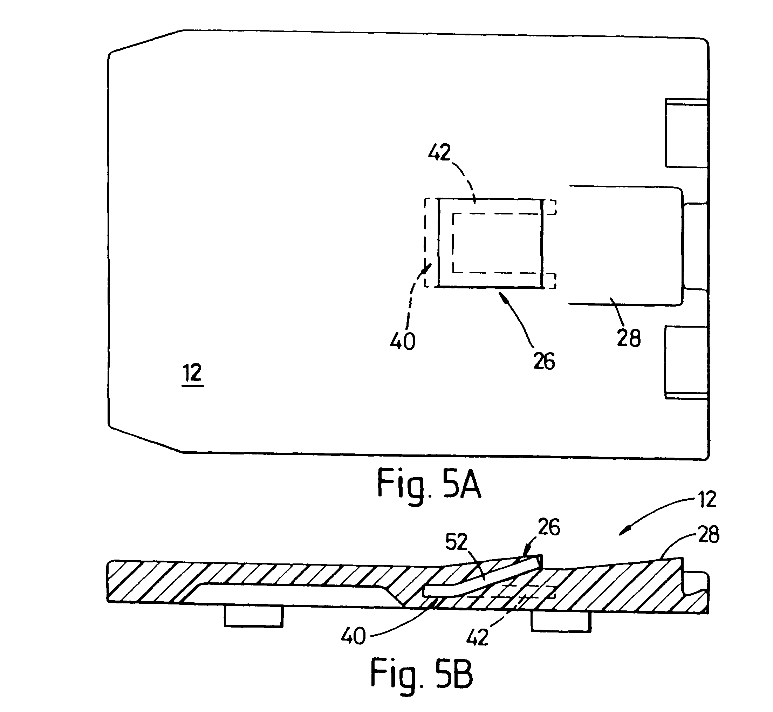

Figs. 5A and 5B show a plastics backing plate 12 including a single reinforcing element 40 similar to that illustrated in figs. 3A and 3B, but in which the flat 42 is not turned down at either edge. In all essential respects, the reinforcing element is identical to that shown in figs. 4A and 4B, save insofar as it only reinforces one latching projection 26.

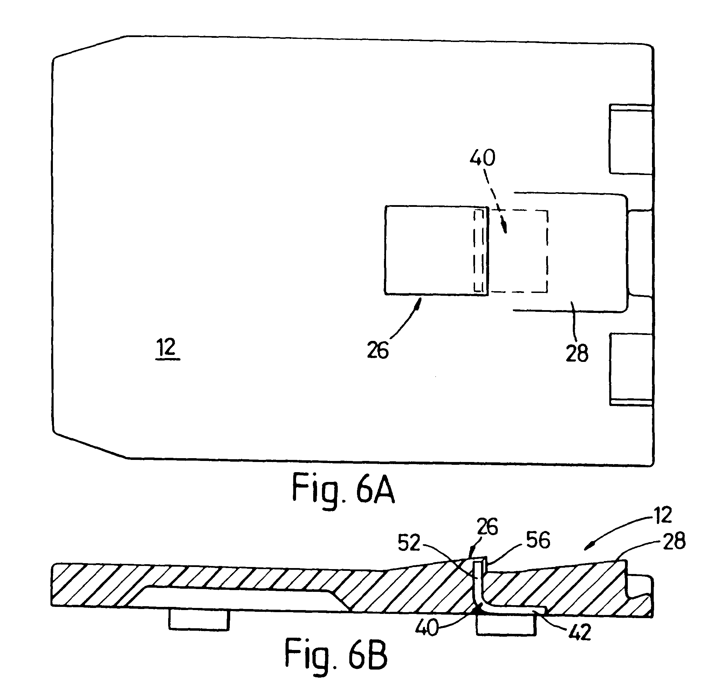

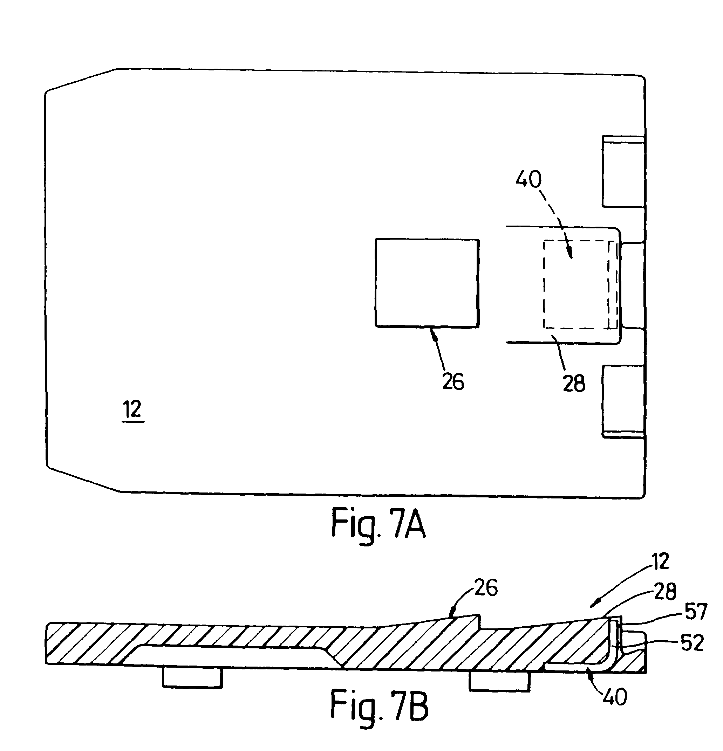

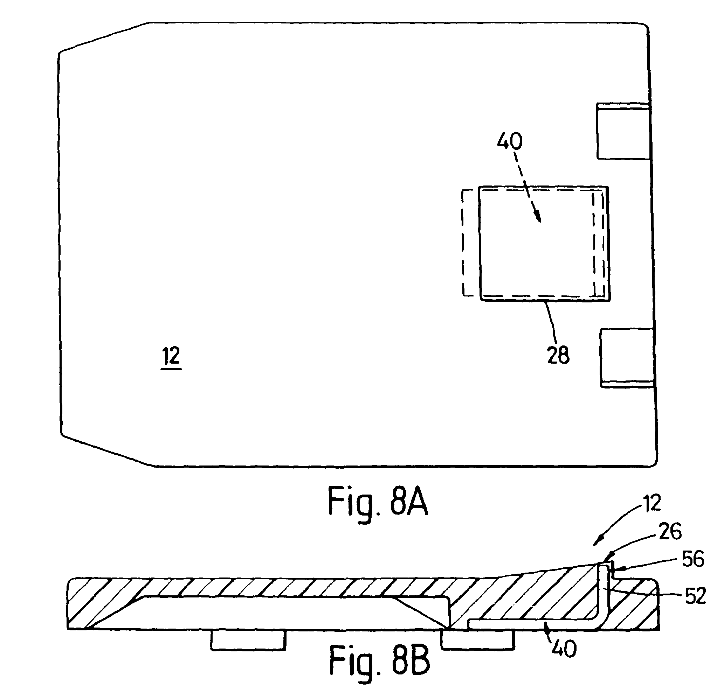

Figs. 6A and 6B, 7A and 7B and 8A and 8B show three different designs of plastics backing plate 12 in which just one latching projection 26; 28 is reinforced. Again the reinforcing elements 40 are formed from pressed or rolled steel, but the tongue 52 is merely an extension of one end of the flat 42 and extends at ninety degrees to it. The tongue extends adjacent the abutment surface 56; 57 of the latching projection 26; 28 to provide the requisite reinforcement.

It is clear from figs. 6B, 7B and 8B that the reinforcing element 40 is coterminous with the surface of the backing plate 12 to which the rubber cushion is to be bonded. There is no need when manufacturing this plate 12 to prevent the reinforcing element 40 from contacting the surface of the mould; indeed that possibility can be exploited to advantage by locating the reinforcing element 40 on the requisite surface and retaining it there by means of magnets during the injection moulding process. When the rubber cushion is vulcanised in place, the encapsulation of the reinforcing element within the polymeric material is complete.

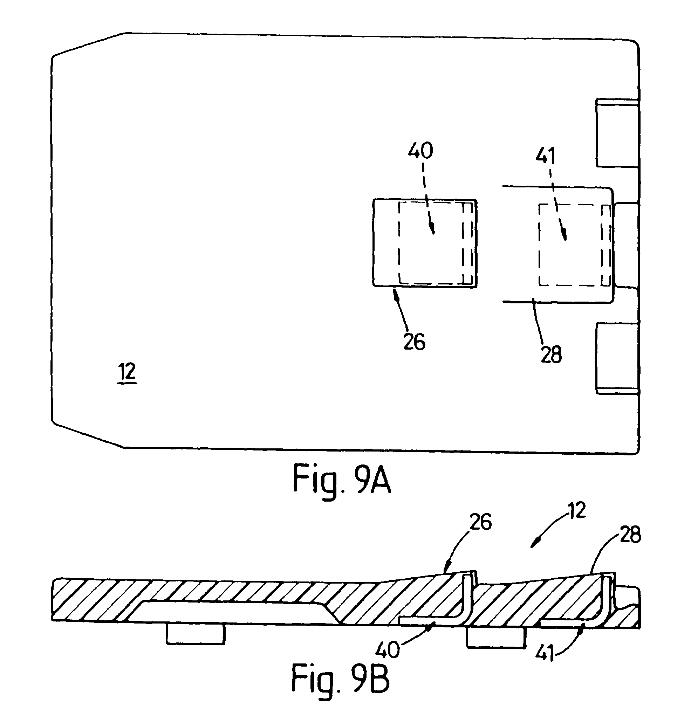

Figs. 9A and 9B illustrate a backing plate 12 including two reinforcing elements 40, 41 which are essentially identical to those shown in figs. 6A and 6B. Each reinforcing element reinforces a respective latching projection.

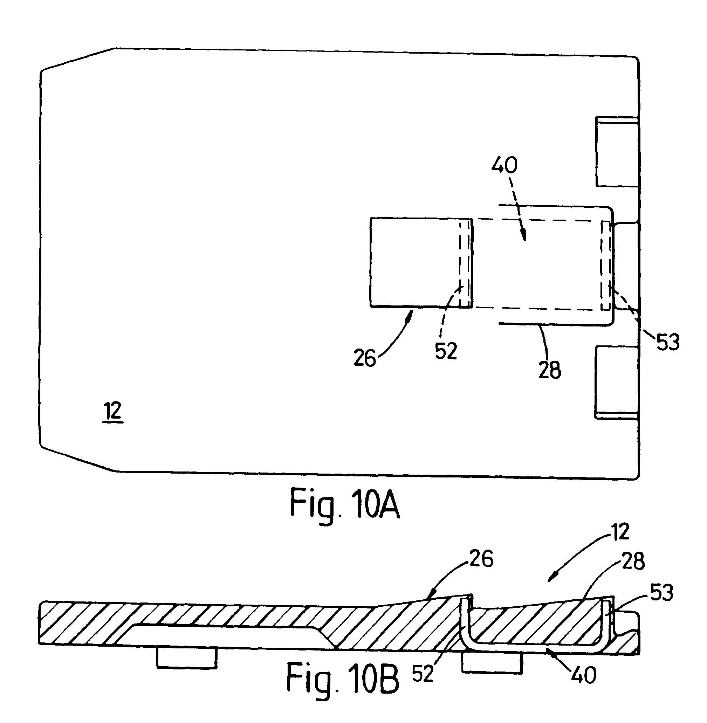

Figs. 10A and 10B illustrate a backing plate 12 in which a common reinforcing element strengthens both latching projections. The reinforcing element 40 is again formed from rolled steel plate, but two tongues 52, 53 project upwards from the flat 42 to form a reinforcing element 40 in the from of a channel section. Both latching projections 26, 28 are reinforced by a respective tongue 52, 53.

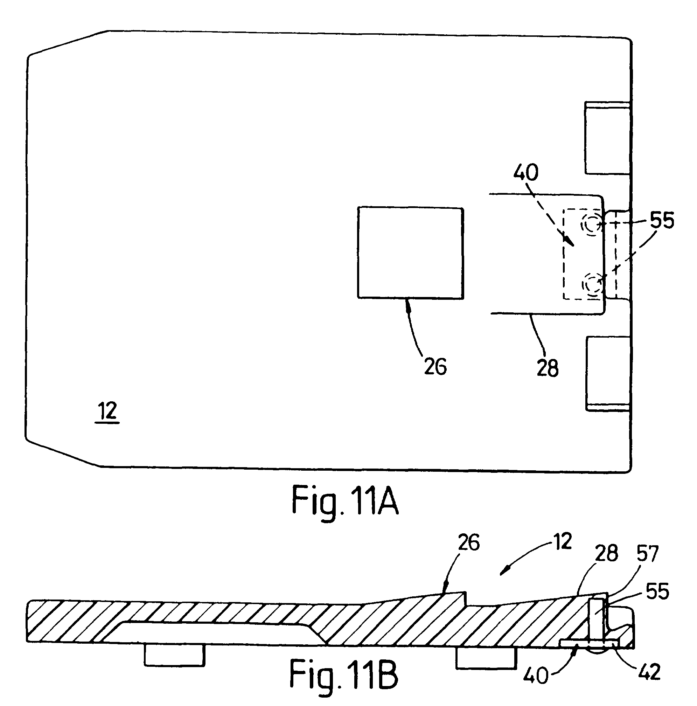

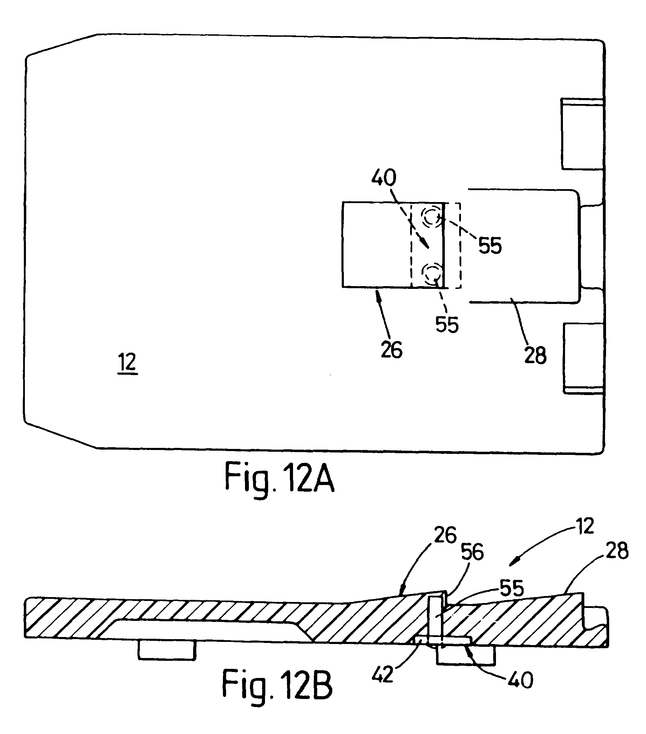

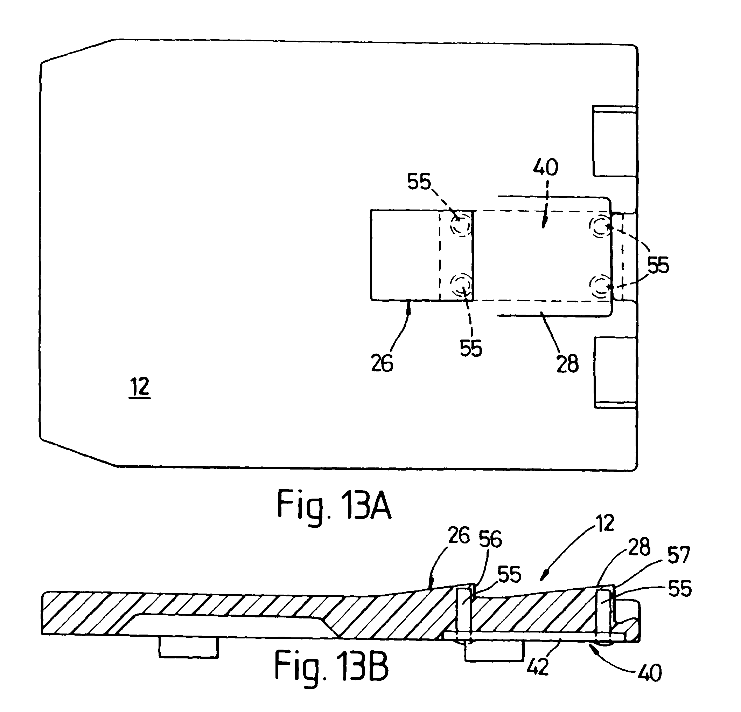

Figs. 11A and 11B, 12A and 12B and 13A and 13B show three different designs of plastics backing plate 12 in which one or two latching projections 26, 28 are reinforced by dowels 55 which are welded to and project from the flat 42 of a reinforcing element 40 at right angles. The dowels are located adjacent the latching surfaces 56, 57 of the latching projections 26, 28 in question.

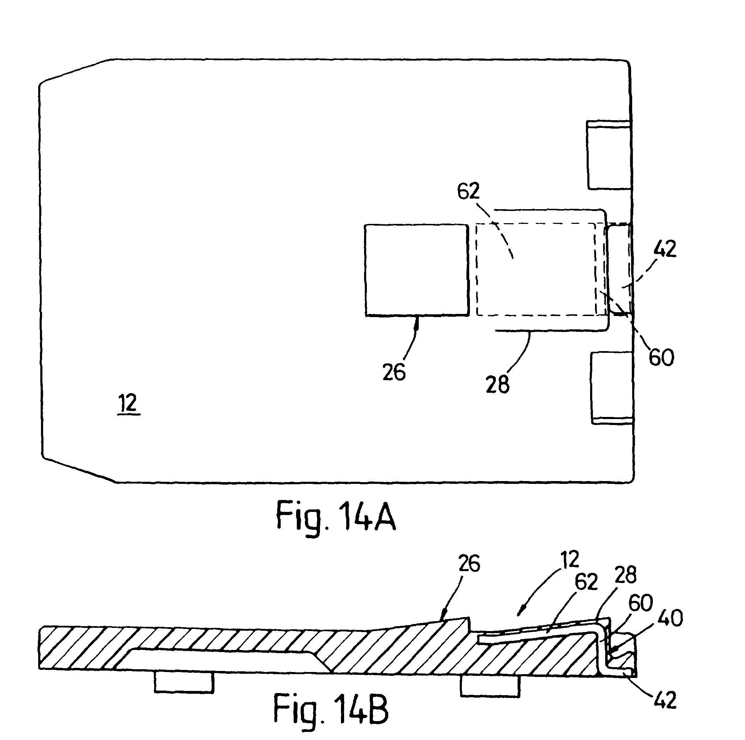

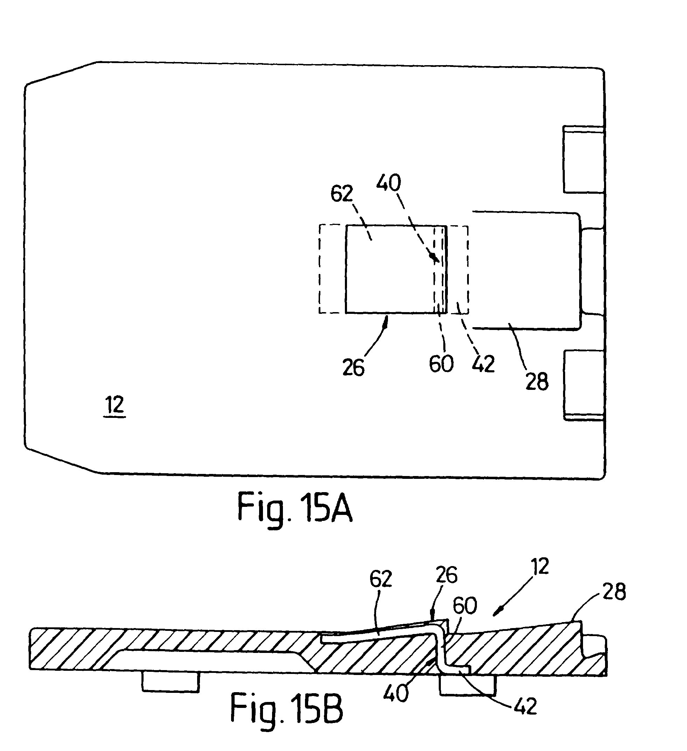

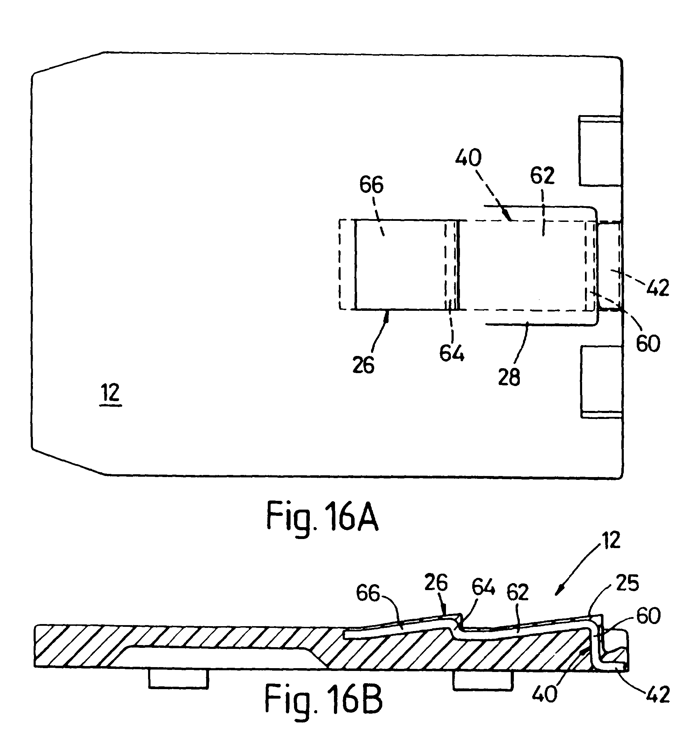

Figs. 14A and 14B, 15A and 15B and 16A and 16B show three different designs of plastics backing plate 12 in which one or two latching projections 26, 28 are reinforced by a continuous reinforcing element 40 which closely follows the contours of the latching projections 26, 28. In figs. 14A, 14B, 15A and 15B, the reinforcing element 40 consists of a flat 42, an upstand 60 and an angled continuation 62 lying below the tapered surface of the latching projection. In figs. 16A and 16B, a further upstand 64 and continuation 66 are provided.

## Claims

1. A road pad (10) adapted for sliding engagement within a track link (24), the pad (10) comprising a body of polymeric material having a latching projection (24), (26) adapted to cooperate with an abutment (30), (32) of the link (24) to prevent withdrawal of the paid (10) characterised in that the latching projection (24), (26) includes a reinforcing element (4) encapsulated within the polymeric material.

2. A pad (10) according to claim 1 in which the body comprises a backing plate (12) and a cushion (14), the reinforcing element (40) being encapsulated within the backing plate (12) or between the backing plate (12) and the cushion (14).

3. A pad (10) according to claim 2 in which the backing plate (12) is formed from plastics material.

4. A pad (10) according to claim 2 or claim 3 in which the cushion (14) is formed from a rubber material.

5. A pad (10) according to any preceding claim in which the reinforcing element (40) is resilient.

6. A pad (10) according to claim 5 in which the reinforcing element (40) is formed from steel plate.

7. A pad (10) according to any preceding claim in which the reinforcing element (40) comprises a flat (42) and a limb (52) projecting from it into the latching projection (24), (26).

8. A pad (10) according to claim 7 in which the limb (52) is a resilient tongue.

9. A pad (10) according to claim 8 in which the tongue (52) is an angled cut-out from the flat (42).

10. A pad (10) according to claim 8 in which the tongue (52) is an angled extension of the flat (42).

11. A pad (10) according to claim 7 in which the limb (52) is a dowel (55) projecting from the flat (42).

12. A pad (10) according to claim 7 in which the limb (52) is an upstand projection from the flat and the reinforcing element (40) further comprises a continuation of the upstand which lies adjacent the surface of the latching projection.

13. A pad (10) according to any preceding claim in which the body has two such latching projections (26).

14. A pad (10) according to claim 13 in which each latching projection (24), (26) is reinforced by a reinforcing element (40) .

15. A pad (10) according to claim 13 in which the latching projections (24), (26) are reinforced by a common reinforcing element (40).

16. A pad according to claim 15 in which the reinforcing element (4) comprises a flat and two limbs projecting from it into the latching projections (24), (26).

17. A pad (10) according to claim 16 in which the reinforcing element (40) forms a channel section with the limbs as the uprights of the channel.

## Patentansprüche

1. Gleiskettenpolster (10), das zum gleitenden Eingriff in eine Gleiskettenverbindung (24) ausgelegt ist, wobei das Polster (10) einen Körper aus Polymermaterial umfaßt, der einen verriegelnden Vorsprung (24) hat, welcher dazu ausgelegt ist, mit einem Anschlag (30), (32) der Verbindung (24) zusammenzuwirken, um ein Herausziehen des Polsters (10) zu verhindern, dadurch gekennzeichnet, daß der verriegelnde Vorsprung (24), (26) ein Verstärkungselement (4) umfaßt, das innerhalb des Polymermaterials eingekappselt ist.

2. Gleiskettenpolster (10) nach Anspruch 1, bei dem der Körper eine Rückenplatte (12) und ein Kissen (14) aufweist, wobei das Verstärkungselement (40) innerhalb der Rückenplatte (12) oder zwischen der Rückenplatte (12) und dem Kissen (14) eingekappselt ist.

3. Gleiskettenpolster (10) nach Anspruch 2, bei dem die Rückenplatte (12) aus einem Kunststoffmaterial hergestellt ist.

4. Gleiskettenpolster (10) nach Anspruch 2 oder Anspruch 3, bei dem das Kissen (14) aus einem Gummimaterial hergestellt ist.

5. Gleiskettenpolster (10) nach einem der vorhergehenden Ansprüche, bei dem das Verstärkungselement (40) elastisch ist.

6. Gleiskettenpolster (10) nach Anspruch 5, bei dem das Verstärkungselement (40) aus einer Stahlplatte hergestellt ist.

7. Gleiskettenpolster (10) nach einem der vorhergehenden Ansprüche, bei dem das Verstärkungselement (40) ein Flachstück (42) und ein Glied (52) aufweist, das davon in den verriegelnden Vorsprung (24), (26) vorsteht.

8. Gleiskettenpolster nach Anspruch 7, bei dem das Glied (52) ein elastischer Schenkel ist.

9. Gleiskettenpolster (10) nach Anspruch 8, bei dem der Schenkel (52) ein abgewinkelter Ausschnitt aus dem Flachstück (42) ist.

10. Gleiskettenpolster (10) nach Anspruch 8, bei dem der Schenkel (52) eine abgewinkelte Verlängerung des Flachstücks (42) ist.

11. Gleiskettenpolster (10) nach Anspruch 7, bei dem das Glied (52) ein Zapfen (55) ist, der von dem Flachstück (42) vorsteht.

12. Gleiskettenpolster (10) nach Anspruch 7, bei dem das Glied (52) ein aufrechtstehender Vorsprung auf dem Flachstück ist und das Verstärkungselement (40) eine Fortsetzung des Vorsprungs umfaßt, die angrenzend an die Oberfläche des verriegelnden Vorsprungs liegt.

13. Gleiskettenpolster (10) nach einem der vorhergehenden Ansprüche, bei dem der Körper zwei solche verriegelnden Vorsprünge (26) hat.

14. Gleiskettenpolster (10) nach Anspruch 13, bei dem jeder verriegelnde Vorsprung (24), (26) durch ein Verstärkungselement (40) verstärkt ist.

15. Gleiskettenpolster (10) nach Anspruch 13, bei dem die verriegelnden Vorsprünge (24), (26) durch ein gemeinsames Verstärkungselement (40) verstärkt sind.

16. Gleiskettenpolster nach Anspruch 15, bei dem das Verstärkungselement (4) ein Flachstück und zwei davon in die verriegelnden Vorsprünge (24), (26) vorstehende Glieder aufweist.

17. Gleiskettenpolster (10) nach Anspruch 16, bei dem das Verstärkungselement (40) einen Kanalabschnitt mit den Gliedern als den Seitenwänden des Kanals bildet.

## Revendications

1. Patin routier (10) destiné à venir par glissement au contact d'un maillon (24) de chenille, le patin (10) comprenant un corps en matériau polymère ayant une saillie (26, (28) de verrouillage destinée à coopérer avec une butée (30), (32) du maillon (24) pour empêcher l'extraction du patin (10), caractérisé en ce que la saillie (26), (28) de verrouillage comprend un élément (40) de renforcement encapsulé dans le matériau polymère.

2. Patin (10) selon la revendication 1, dans lequel le corps comprend une plaque d'appui (12) et un coussin (14), l'élément de renforcement (40) étant encapsulé dans la plaque d'appui (12) ou entre la plaque d'appui (12) et le coussin (14).

3. Patin (10) selon la revendication 2, dans lequel la plaque d'appui (12) est formée de matière plastique.

4. Patin (10) selon la revendication 2 ou 3, dans lequel le coussin (14) est formé d'un matériau du type gomme ou caoutchouc.

5. Patin (10) selon l'une quelconque des revendications précédentes, dans lequel l'élément de renforcement (40) est élastique.

6. Patin (10) selon la revendication 5, dans lequel l'élément de renforcement (40) est formé d'une plaque d'acier.

7. Patin (10) selon l'une quelconque des revendications précédentes, dans lequel l'élément de renforcement (40) comporte un plat (42) et une branche (52) dépassant de celui-ci dans la saillie (26), (28) de verrouillage.

8. Patin (10) selon la revendication 7, dans lequel la branche (52) est une languette élastique.

9. Patin (10) selon la revendication 8, dans lequel la languette (52) est une découpe inclinée du plat (42).

10. Patin (10) selon la revendication 8, dans lequel la languette (52) est un prolongement incliné du plat (42).

11. Patin (10) selon la revendication 7, dans lequel la branche (52) est une cheville ou goujon (55) dépassant du plat (42).

12. Patin (10) selon la revendication 7, dans lequel la branche (52) est une saillie dépassant du plat et l'élément de renforcement (40) comporte en outre un prolongement de la partie qui dépasse et qui est adjacente à la surface de la saillie de verrouillage.

13. Patin (10) selon l'une quelconque des revendications précédentes, dans lequel le corps a deux des saillies (26) de verrouillage.

14. Patin (10) selon la revendication 13, dans lequel chaque saillie (26), (28) de verrouillage est renforcée par un élément de renforcement (40).

15. Patin (10) selon la revendication 13, dans lequel les saillies (26), (28) de verrouillage sont renforcées par un élément commun de renforcement (40).

16. Patin (10) selon la revendication 15, dans lequel l'élément de renforcement (40) comprend un plat et deux branches dépassant du plat dans les saillies de verrouillage (26), (28).

17. Patin (10) selon la revendication 16, dans lequel l'élément de renforcement (40) forme un tronçon de canal avec les branches comme partie perpendiculaire du canal.
